(19) Europäisches Patentamt
European Patent Office
Office européen des brevets

(11) EP 0 741 171 A2

# (12) EUROPÄISCHE PATENTANMELDUNG

(43) Veröffentlichungstag:
**06.11.1996 Patentblatt 1996/45**

(51) Int. Cl.[6]: **C09C 1/00**

(21) Anmeldenummer: **96106493.8**

(22) Anmeldetag: **25.04.1996**

(84) Benannte Vertragsstaaten:
**DE ES FR GB IT**

(30) Priorität: **05.05.1995 DE 19516580**

(71) Anmelder: **MERCK PATENT GmbH**
**64293 Darmstadt (DE)**

(72) Erfinder:
- **Glausch, Ralf, Dr.**
  **64279 Darmstadt (DE)**
- **Reinhard, Georg, Prof. Dr.**
  **01097 Dresden (DE)**
- **Jircik, Renate**
  **01217 Dresden (DE)**
- **Rammelt, Ursula, Dr.**
  **01217 Dresden (DE)**

## (54) Pigmentzubereitung

(57) Pigmentzubereitung, enthaltend

(i) 10-80 Masse-% eines mit einem Metalloxid beschichteten, plättchenförmigen Trägermaterials und

(ii) 20-60 Masse-% eines Aktivpigmentes.

Das mit einem Metalloxid beschichtete Trägermaterial ist vorzugsweise ein mit Titandioxid oder Eisenoxid beschichteter Glimmer.

Das Aktivpigment ist vorzugsweise Zinkphosphat, Zinkborat, Calciummetaphosphat, Phthalocyanin oder ein Hydroxylionen bindendes Material, wie Kieselgel, Silikat, Alumosilikat, Calcit, Metaphosphate oder Bi- oder Triphosphate.

EP 0 741 171 A2

Printed by Rank Xerox (UK) Business Services
2.13.8/3.4

**Beschreibung**

Die Erfindung betrifft Pigmentzubereitungen, die frei von Blei-, Chromat- und toxischen organischen Verbindungen sind, für die Formulierung von Anstrichstoffen, insbesondere Korrosionsschutz-Grundanstrichstoffen.

Der Grundierung kommt beim Korrosionsschutz metallischer Gegenstände durch organische Beschichtungen bekanntlich eine besondere Bedeutung zu. Sie hat in erster Linie eine gute und energetisch stabile Adhäsion auf dem Metallsubstrat, insbesondere bei Einwirkung von feuchten Atmosphären oder Wasser, zu gewährleisten. Weiterhin sollte ihre Permeabilität für Wasser und Sauerstoff möglichst gering sein und schließlich wird von der Grundierung die gute Eignung als Substrat für nachfolgende Beschichtungen verlangt.

Während die Ausbildung des adhäsiven Verbundes mit der zu schützenden Metalloberfläche sowie die Verknüpfungsreaktionen der Grundierung mit einer nachfolgend aufgetragenen organischen Beschichtung hauptsächlich durch die Wahl des sog. Filmbildners (organisches Bindemittel) im Zusammenwirken mit geeigneten Filmbildehilfsmitteln (z.B. Katalysatoren für die Polymerfilm-Vernetzung) regulierbar sind, werden die Permeationseigenschaften von Anstrichschichten auch durch die Einbringung von Pigmenten wesentlich beeinflußt.

Besonders vorteilhaft ist die Verwendung typischer Barrierepigmente, die sich mit Schollen- oder Plättchenstruktur so günstig in die organische Beschichtung einlagern, daß damit eine bedeutende Vergrößerung der Diffusionswege und mithin eine starke Senkung der Permeabilität eintritt. Voraussetzung für die optimale Ausprägung diese Effektes ist natürlich, daß die Wechselwirkungen Pigment/Bindemittel hinreichend wasserstabil sind.

Gute Korrosionsschutz-Grundierungen enthalten neben Barrierepigmenten auch Aktivpigmente, die ihre Wirkung erst entfalten sollen, wenn in der Beschichtung bis zum Metallsubstrat durchgängige lokale Defekte entstanden sind. Bis dahin sollen sie ebenfalls zum Barriereeffekt beitragen bzw. den durch Barrierepigmente bedingten Effekt zumindest nicht herabsetzen.

Auf welche Weise und in welchem Ausmaß ein Aktivpigment in solchen lokalen Defekten beim Eindringen korrosiver wäßriger Medien reagiert und letztlich ein "Ausheilen" des Defektes verursachen kann, hängt naturgemäß von vielen Einflußgrößen ab. Genannt seien nur die Größe des Defekts, die Art des Pigments, die Pigmentvolumenkonzentration (PVK) und die Zusammensetzung des in den Defekt eingedrungenen korrosiven Mediums.

In Zinkstaubgrundierungen wirken die Zinkpartikel beispielsweise als Opferanode. Außerdem entstehen schwerlösliche Korrosionsprodukte des Zinks, die sich in Defekten von Beschichtungen auf Stählen als feste Verbindungen ausscheiden und diese verstopfen.

Bleimennige und Zinkchromat sind dagegen starke Oxidationsmittel und wirken auf freigelegte Metalloberflächen innerhalb von Beschichtungen bei Gegenwart von Wasser passivierend. Die Reaktionsprodukte führen schließlich zur Bildung schwerlöslicher Verbindungen (Metallseifen), die Defekte in organischen Schichten verstopfen und außerdem noch korrosionsfördemde Ionen aus angrenzenden wäßrigen Medien (z.B. Sulfat und Chlorid) chemisorptiv binden.

Die Verwendung von Zinkstaubgrundierungen ist mit verschiedenen Nachteilen verbunden. Es bedarf einer extrem hohen PVK an Zink, was sehr kostenaufwendig ist. Außerdem ist die Wirkung des Zinks als Opferanode nur gegenüber bestimmten Eisenwerkstoffen bei Normaltemperatur gewährleistet. In wärmeren Wässern (≧ 60 °C) tritt Potentialumkehr auf, was dann eine stärkere Korrosion des in Defekten einer Beschichtung freiliegenden Stahlsubstrats infolge Lokalelementbildung zur Folge hat. Als weiterer Nachteil ist zu nennen, daß die Zinkpigment-Partikel selbst zur Korrosion neigen, wenn die Beschichtung Feuchtigkeit aufgenommen hat. Der dabei entstehende gasförmige Wasserstoff kann die Beschichtung mechanisch zerstören und dadurch gerade das Vordringen korrosiver Medien bis zum zu schützenden Metallsubstrat begünstigen.

Die Anwendung von Blei- und Chromatverbindungen als Pigmente in Anstrichstoffen ist nicht mehr erlaubt, da diese als toxisch und karzinogen klassifiziert sind. Als alternative Aktivpigmente wurden bisher vor allem verschiedene feste, schwerlösliche Zinkverbindungen, wie Zinkphosphat, Zinkborat oder Zinkgluconat vorgeschlagen. Insbesondere das Zinkphosphat wird noch zunehmend appliziert. Es kann naturgemäß keine elektrochemischen Wirkungen entfalten. Wie bereits ausgeführt wurde, beruht die Aktivwirkung von Zinkphosphatpigmenten in Korrosionsschutz-Grundierungen hauptsächlich darauf, daß es die Korrosionsprodukte von Eisenwerkstoffsubstraten, die zunächst bei Einwirkung eines aggressiven wäßrigen Mediums in Defekten der organischen Beschichtung entstehen, in feste, praktisch unlösliche Verbindungen, zum Beispiel in basische Fe(III)-Zinkphosphate, umwandelt, die ihrerseits zur Verstopfung der Defekte führen. Im Unterschied zu den obengenannten Aktivpigmenten ist die Wirkung des Zinkphosphats also auf eine vorhergehende Korrosion des zu schützenden Metallsubstrats in Defektstellen der organischen Beschichtung am Porengrund angewiesen. Erwartungsgemäß steht daher der Korrosionsschutzeffekt des Zinkphosphats gewöhnlich weit hinter dem von Zinkchromat oder Bleimennige zurück und ist zudem stark von der Zusammensetzung des wäßrigen Milieus im Defekt abhängig. Gleiches trifft prinzipiell auf alle anderen Aktivpigmente zu, deren Wirkmechanismus in Analogie zum Zinkphosphat auf der reaktiven Umwandlung primär entstandener Korrosionsprodukte des betreffenden Metallsubstrats unter Bildung fester Salze oder Komplexverbindungen in lokalen Defekten einer organischen Beschichtung besteht, wie etwa Zinkborat oder Zinkgluconat.

Um diesen Nachteil zu kompensieren, wurde vorgeschlagen, die Pigmentvolumenkonzentration solcher Aktivpigmente deutlich höher einzustellen, als das bei früheren Anstrichstofformulierungen für das Zinkchromat der Fall war und darüber hinaus besonders feindisperse Pigmentpulver einzusetzen, um eine gleichmäßige Verteilung innerhalb der Beschichtung zu erreichen (US Pat. 4.243.707). Da die betreffenden Pigmente jedoch im beschränkten Maße wasserlöslich sind und diese Auflösungstendenz bei starker Verringerung der Partikelgröße merklich ansteigt, neigen die damit formulierten Beschichtungen mit zunehmender Pigmentvolumenkonzentration mehr und mehr zur osmotisch stimulierten Quellung. Diese hat ihrerseits eine relativ schnelle, großflächige Enthaftung der Beschichtung vom Metallsubstrat und damit verminderte Korrosionsschutzeigenschaften zur Folge (Progr. in Org. Coatings 18 (1990) 123). Bei Pigmenten wie Zinkphosphat und Zinkborat kommt hinzu, daß sie unterschiedliche Anteile Hydratwasser enthalten können. Um sie in feindisperser Form herzustellen, sind sie intensiver zu trocknen und enthalten dann nur einen niedrigen Hydratwasseranteil. Das Zinkphosphatpigment liegt dann z.B. als Dihydrat $Zn_3(PO_4)_2 \cdot 2\ H_2O$ vor. Bei Beaufschlagung von damit pigmentierten Beschichtungen mit Wasser besteht eine Affinität zur Umwandlung in das Tetrahydrat, was die Quellung der Beschichtung ebenfalls fördert und ihre Korrosionsschutzeigenschaften herabsetzt. Ähnliche Effekte sind auch von Zinkboraten bekannt. Effekte dieser Art treten naturgemäß um so stärker in Erscheinung, je höher die Pigmentvolumenkonzentration solcher Pigmente gewählt wird. Um sie hinreichend einzuschränken, gehen andere Vorschläge davon aus, die PVK derartiger Pigmente nur in etwa so hoch einzustellen, wie das für Zinkchromat in früheren Anstrichstofformulierungen üblich war, aber diese Pigmente mit einem Zweitstoff oberflächenmodifiziert bzw. ihn als weitere Komponente enthaltend einzusetzen. Durch die Oberflächenmodifizierung hydratwasserarmer Pigmente mit organischen oder anorganischen Belägen kann zwar dem erwähnten Einbau weiteren Hydratwassers wirksam begegnet werden, jedoch wird dadurch nicht unbedingt eine Verbesserung der Aktivwirkung des Pigments erreicht. Im Vergleich dazu besser bewährt haben sich Kombinationen eines Aktivpigments mit einer weiteren Feststoffkomponente, die den Prozeß der Konversion der primär entstandenen Korrosionsprodukte in eine praktisch unlösliche Verbindung unterstützt, etwa durch Einstellung eines günstigen pH-Wertes im Defekt der organischen Beschichtung. Genannt seien hier beispielsweise Kombinationen Zinkphosphat/Zinkborat (US 3.829.395), Zinkphosphat/Zinkmolybdat, Zinkphosphat/Zinkoxid, Zinkphosphat/Aluminiumphosphat (oder polyphosphat) und Bariummetaborat/Zinkoxid. In der DD 245.892 wird vorgeschlagen, zur Verbesserung der Wirkung von Zinkphosphat 8 bis 16 % eines Gemisches aus 30 bis 70 % natürlichem Calcit und 70 bis 30 % synthetischem Calciumcarbonat in den Anstrichstoff einzubringen, da auf diese Weise gewährleistet sein soll, daß in Defekten der Beschichtung auf Stahl bei Eindringen von Wasser ein günstiger pH-Wert für die Bildung fester Zn-Fe-Phosphate und basischer Karbonate vorliegt. Die mit solchen Pigmentkombinationen erreichten Korrosionsschutzeigenschaften von Grundierungen sind jedoch insbesondere bei Belastung in chloridhaltigen Medien geringer als bei Einsatz der klassischen Aktivpigmente Bleimennige oder Zinkchromat. Die Verwendung von Calciumcarbonat birgt zudem die Gefahr in sich, daß die Quellbarkeit von Beschichtungen verstärkt wird. Durch Hydrolyse dieses Füllstoffes kann schließlich das wäßrige Medium innerhalb der Beschichtung pH-Werte um 12 annehmen, wodurch ihre Deadhäsion (Delamination) gefördert wird und die Korrosionsschutzwirkung relativ schnell verloren geht.

Für die Formulierung von wasserverdünnbaren Polymerdispersionen als Korrosionsschuts-Grundanstrichstoffe ist im Vergleich zu den lösungsmittelhaltigen Bindemitteln noch zu beachten, daß Pigmente, die in Wasser merklich löslich sind, die Stabilität der Dispersion beeinträchtigen können. Oberhalb bestimmter systemspezifischer Ionenkonzentrationen kann es dadurch sogar zur Koagulation im Gebinde kommen, so daß der Anstrichstoff unbrauchbar wird. Ähnliche Effekte sind zu erwarten, wenn Pigmente eine Änderung des pH-Wertes der Polymerdispersion erzwingen.

Die Wirkung der Aktivpigmente, die wie die Phosphate, Borate, Molybdate, Gluconate etc. eine Umwandlung primärer Korrosionsprodukte in feste, die Defekte einer organischen Beschichtung verstopfende Verbindungen anstreben, wird erwartungsgemäß verstärkt, wenn sie mit einem Oxidationsmittel kombiniert werden. Hinreichend starke Oxidationsmittel, wie eben Pb-Mennige oder Chromate versetzen dann das in Defekten einer organischen Beschichtung freiliegende Metallsubstrat in einen Passivzustand, so daß das weitere Pigment, wie Phosphat, Borat oder Molybdat nur die im Fall von passiven Stahlsubstraten noch geringfügig entstehenden Fe(III)-Ionen zu konvertieren braucht.

Da die Blei- und Chromatverbindungen nicht mehr appliziert werden können, wurde vorgeschlagen, Zinkphosphate oder -borate in Kombination mit organischen Nitroverbindungen, insbesondere ihren schwerlöslichen Zinksalzen, einzusetzen. Produkte dieser Art sind heute noch handelsüblich (SICORINE; BASF). Diese Nitroverbindungen sind schwächere Oxidationsmittel als z.B. die Chromate und beschleunigen die Korrosion des in Poren einer Beschichtung freigelegten Metallsubstrats, etwa nach

$$Fe \rightarrow Fe^{2+} + 2\ e^-$$

und reduzieren sich dabei selbst, z.B. nach:

$$R\text{-}NO_2 + 2\ H^+ + 2\ e^- \rightarrow R\text{-}NO + H_2O$$

Dadurch stehen zwar die Korrosionsprodukte des zu schützenden Metallsubstrats relativ schnell und ausreichend zur Bildung fester, die Defekte einer organischen Beschichtung verstopfenden Verbindungen bereit, worauf die relativ gute Korrosionsschutzwirkung der auf solche Art mobilisierten Zinkphosphat- oder Zinkboratpigmente zu beruhen scheint. Unter der heute strengeren Umweltschutzgesetzgebung müssen allerdings diese organischen Nitroverbindungen und wohl in noch stärkerem Maße die daraus entstehenden Reduktionsprodukte (Nitrosoverbindungen!) als toxikologisch bedenklich eingestuft werden, so daß die auf diese Weise modifizierten Aktivpigmente nicht als echte Alternative für die Substitution toxischer Chromate akzeptiert werden können.

In der Deutschen Patentanmeldung P 44 11 568.7 wird eine Pigmentzubereitung für Korrosionsschutzanstrichstoffe beschrieben, die eine chelatbildende Verbindung, ein plättchenförmiges Material und ein Hydroxylionen bindendes Material enthält. Diese Pigmentzubereitung kann zusätzlich noch ein plättchenförmiges, leitfähiges Pigment enthalten. Die mit der Pigmentzubereitung hergestellten Schutzanstriche auf Eisenwerkstoffoberflächen bewirken einen besseren Schutz gegen Korrosion als Schutzanstriche mit Chromatpigmenten. Bei Wahl eines geeigneten Bindemittels sind diese Schutzanstriche auch für andere korrodierende Metalle zum Zwecke eines wirksamen Korrosionsschutzes unter atmosphärischer Belastung und in belüfteten wäßrigen Medien einsetzbar. Die Pigmentzubereitung eignet sich aber nicht für Wasserlacke.

Es besteht deshalb ein Bedarf an Pigmentkombinationen, die frei von Blei-, Chromat- und toxischen organischen Verbindungen sind und bei ihrer Verwendung in Grundanstrichen auf korrosionsanfälligen Metallen eine Korrosionswirkung entfalten, die der von Blei- und Chromatpigmenten mindestens ebenbürtig ist.

Der Erfindung liegt die Aufgabe zugrunde, eine Pigmentzubereitung bereitzustellen, die sowohl in Anstrichstofformulierungen auf Basis üblicher Bindemittel als auch in Wasserlacke einarbeitbar ist und als Grundierung auf den verschiedensten Metallsubstraten, insbesondere auf Eisenwerkstoffoberflächen, Korrosionsschutzeigenschaften besitzt, die mit der Schutzwirkung von bleihaltigen und Chromat-Pigmenten vergleichbar ist. Diese Pigmentzubereitung soll nicht nur unter atmosphärischer Belastung, sondern auch in belüfteten wäßrigen Medien ausgeprägte Korrosionsschutzeigenschaften besitzen.

Diese Aufgabe wird gemäß der vorliegenden Erfindung durch eine Pigmentzubereitung gelöst, enthaltend:

(i) 10-80 Masse-%, bevorzugt 30-60 Masse-%, eines mit einem Metalloxid beschichteten, plättchenförmigen Trägermaterials hohen elektrischen Widerstandes und ausgeprägter Chemikalienbeständigkeit, und

(ii) 20-90 Masse-%, bevorzugt 40-80 Masse-%, eines Aktivpigments.

Unter dem Begriff "Metalloxid beschichtetes, plättchenförmiges Trägermaterial" sind auch Gemische von Trägermaterialien, die mit unterschiedlichen Metalloxiden beschichtet sind, zu verstehen.

Als plättchenförmiges Trägermaterial werden natürlicher oder synthetischer Glimmer und andere Schichtsilikate, wie Talk, Kaolin, Sericit oder auch Glasplättchen verwendet.

Bevorzugte plättchenförmige Trägermaterialien sind Glimmer und plättchenförmige Pigmente, die gemäß der internationalen Anmeldung PCT/EP92/02 351 hergestellt werden. Sie bestehen aus einer transparenten, anorganischen plättchenförmigen Matrix, vorzugsweise Siliciumdioxid. Die Matrix wird durch Verfestigung eines flüssigen Precursors auf einem endlosen Band hergestellt. In diese Matrix können noch zusätzliche Inhaltsstoffe eingearbeitet werden.

Die plättchenförmigen Trägermaterialien haben typischerweise eine Dicke zwischen 0,05 und 5 µm und insbesondere zwischen 0,2 und 2 µm. Die Ausdehnung in den beiden anderen Dimensionen beträgt zwischen 1 und 250 µm und insbesondere zwischen 5 und 60 µm. Das Verhältnis der Ausdehnung in der Hauptdimension zur Dicke (aspect ratio) beträgt mehr als 3 und vorzugsweise mehr als 5.

Die plättchenförmigen Trägermaterialien können mit $TiO_2$, $Fe_2O_3$, $Cr_2O_3$, $ZrO_2$, $SiO_2$, $Al_2O_3$ und ZnO beschichtet sein.

Die Metalloxidschichten werden vorzugsweise naßchemisch aufgebracht, wobei die zur Herstellung von Perlglanzpigmenten entwickelten naßchemischen Beschichtungsverfahren angewendet werden können; derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren Patentdokumenten und sonstigen Publikationen.

Geeignete plättchenförmige Trägermaterialien, die mit einem Metalloxid beschichtet sind, sind Perlglanzpigmente auf Basis von Glimmer, die im Handel unter der Bezeichnung "Iriodin®" (Produkt von E. Merck, Darmstadt) erhältlich sind.

Die auf dem plättchenförmigen, chemisch inerten Trägermaterial, vorzugsweise Glimmer, festhaftende Oxidbelegung ist bei Kontakt mit wäßrigen Medien im Bereich $2 \leqq pH \leqq 12$ beständig und bildet lediglich amphotere Oberflächen-Hydroxylgruppen aus, die durch einen isoelektrischen Punkt $pH_{iso} < 5$ gekennzeichnet sind. Pigmentpartikel dieser Art lassen sich in organischen Bindemitteln, die Polymere mit geeigneten funktionellen Gruppen, wie Carboxyl- und Alkenyl-C-C-Doppelbindungen enthalten, gut und gleichmäßig suspendieren. Sie treten dabei mit den Polymeren des Bindemittels in Säure-Base-Wechselwirkungen, als deren Folge sich innerhalb der fluiden Mischphase eine Vorzugsorientierung der Feststoffbestandteile aufbaut. Diese wirkt sich förderlich auf die Gleichmäßigkeit der Verteilung weiterer Pigmente und Zusätze im Anstrichstoff aus und wird um so mehr intensiviert, wie während der Filmbildung auf Substraten Lösungsmittel aus der zunächst noch nassen Anstrichschicht verdampft.

Die durch die oxidbelegten Feststoffpigmente erfindungsgemäß bewirkte Vorzugsorientierung der polymerhaltigen Partikel innerhalb von organischen Filmbildnem schafft schließlich besonders vorteilhafte Voraussetzungen für eine gleichmäßige, energieintensive Adhäsion der damit auf Metallsubstraten erzeugten Beschichtungen und für die Vernetzung der funktionellen Polymere des Bindemittels untereinander zu einer geschlossenen Schicht extrem niedriger Strukturporigkeit, so daß insgesamt Beschichtungen bemerkenswert hoher Barrierewirkung entstehen.

Der spezifische elektrische Widerstand $R_{sp}$ ($\Omega \cdot cm$) des mit einem Metalloxid beschichteten, plättchenförmigen Trägermaterials sollte gleich oder größer $10^8$ ($\Omega \cdot cm$) bei 25 °C sein.

Die an Pulverpreßlingen mittels des Kondensator-Entladeverfahrens und der Vierspitzen-Methode bei 25 °C gemessenen Werte ergaben für Iriodin 9504 (Perlglanzpigment, Hersteller: E. Merck) einen Mittelwert von $2,3 \cdot 10^{10}$ $\Omega \cdot cm$ und für Iriodin 9103 einen Mittelwert von $5,5 \cdot 10^{11}$ $\Omega \cdot cm$.

Unter dem Begriff "Aktivpigment" sind Verbindungen zu verstehen, die in der Lage sind, in Defekten einer organischen Beschichtung primär entstehende Korrosionsprodukte in eine feste, wasserstabile Verbindung zu konvertieren und dadurch eine Verstopfung der Defekte mit weiterer Aufrechterhaltung der Korrosionsschutzeigenschaften der Beschichtung gewährleisten.

Beispiele für diese Art von Aktivpigmenten sind Zinkphosphat, Zinkborat und Calciummetaphosphat.

Weiterhin sind unter dem Begriff "Aktivpigment" monomere und/oder polymere, metallfreie oder metallhaltige, Chelat-Komplex-Verbindungen gemäß den allgemeinen Formeln I und II zu verstehen.

I

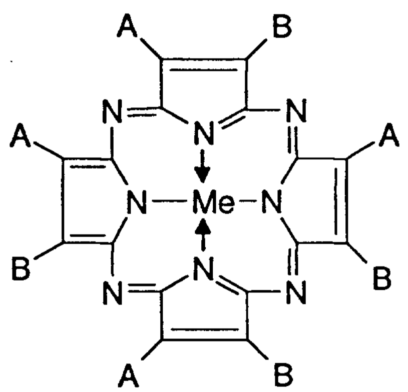

II

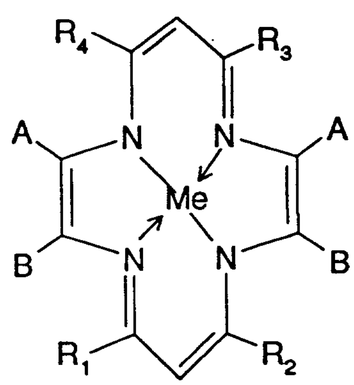

worin

| | |
|---|---|
| A und B | jeweils unabhängig voneinander einen aromatischen oder cycloaliphatischen Rest, der auch Heteroatome, wie S, Se, O und N, sowie Aryl-, Alkyl-, Halogen-, sauerstoff-, schwefel- oder stickstoffhaltige Gruppen als zusätzliche Substituenten enthalten kann, |
| $R^1$, $R^2$, $R^3$ und $R^4$ | H-Atome oder Alkylreste und |
| Me | Fe, Ni, Co, Mn, Bi, Sn, Zn oder $H_2$ |

bedeuten,
wobei diese Chelat-Komplex-Verbindungen einen passivierenden Effekt auf die Metalloberfläche ausüben.

Als Chelat-Komplex-Verbindungen werden vorzugsweise Phthalocyanine, Tetraarylporphyrine und Tetraazaannulene eingesetzt. Unter den Phthalocyaninen sind Metallphthalocyanine und insbesondere Eisenphthalocyanin bevorzugt.

Dem Problem der durch das Metallphthalocyanin bedingten hohen Herstellungskosten kann dadurch begegnet werden, daß man diese Wirkkomponente auf leitfähige Trägermaterialien, wie oberflächenmodifizierten Glimmer und/oder Graphit, aufbringt und dadurch mit weit weniger der eigentlichen Wirksubstanz Metallphthalocyanin bei gleichem oder sogar verstärktem Korrosionsschutzeffekt auskommt.

Unter dem Begriff "Aktivpigment" werden erfindungsgemäß auch Hydroxylionen bindende Materialien wie zum Beispiel Metaphosphate, Bi- und Triphosphate, Kieselgele, Silikate, Alumosilikate, Calcit und alle schwerlöslichen

Metallsalze, die schwerlösliche basische Salze oder Komplexverbindungen mit $OH^-$-Ionen bilden, verstanden. So wird beispielsweise aus $Ca[SiO_3]$ durch Aufnahme von Hydroxylionen $Ca_3(OH)_2[Si_4O_{10}]$ gebildet.

Weiterhin können solche Verbindungen verwendet werden, die an ihrer Oberfläche ein Puffersystem bilden, das den pH-Wert des angrenzenden, wäßrigen Mediums in den Bereich $6 \leqq pH \leqq 8{,}5$ fixiert, der für die Delamination organischer Beschichtungen auf Stahlsubstraten als ungefährlich gilt:

$$R - COO^- + H_2O \rightleftarrows R - COOH + OH^-$$

Bevorzugt wird Calciummetaphosphat verwendet, das die bei der Reduktion des Sauerstoffs entstehenden Hydroxylionen bindet.

Erfindungsgemäß können auch Gemische der oben beschriebenen Aktivpigmente eingesetzt werden.

Die erfindungsgemäße Pigmentzubereitung wird aus den Einzelkomponenten mit den in der Pigment- und Anstrichmittelindustrie üblichen Verfahren und Maschinen hergestellt und in Anstrichformulierungen auf Basis üblicher Bindemittel dispergiert. Es können aber auch die einzelnen Komponenten nacheinander im Bindemittel dispergiert werden.

Bei der Einarbeitung der oxidbelegten plättchenförmigen Pigmente sind solche Verfahren anzuwenden, die nicht zur Zerstörung dieser Partikel führen, beispielsweise Zerbrechen durch Mahlen. Bewährt hat es sich, diese oxidbelegten plättchenförmigen Pigmente in einer für die Konsistenz des betreffenden Anstrichstoffes günstigen Teilchengrößen-Fraktion auszuwählen und dann mittels Dispergatoren in den Anstrichstoff einzuarbeiten.

Als Bindemittel werden Alkylharze, Polymethane, chlorierter Kautschuk oder Melaminharze eingesetzt, die in einer Menge von 35 bis 55 Masse-% in den Anstrichformulierungen enthalten sind.

Für die Auswahl der Bindemittel ist es erforderlich Optimierungsarbeiten durchzuführen, die aber fachgemäßes Handeln darstellen. Es muß gewährleistet sein, daß ausreichend viel im Elektrolyten des Defektes einer Beschichtung gelöster Sauerstoff im sog. 4-Elektronen-Schritt unter Bildung von $OH^-$-Ionen reduziert wird und diese entstandenen OH-Ionen wieder "abgepuffert" werden. Steht nur relativ wenig gelöster Sauerstoff zur Verfügung und wird dieser nur nach einem 2-Elektronen-Schritt, z.B. nach:

$$O_2 + 2\,H^+ + 2\,e^- \rightarrow H_2O_2$$

reduziert, dann wirkt er nicht als Passivator, sondern fördert lediglich die anodische Auflösung des Metallsubstrats.

Auch eine zu hohe Konzentration an Inertstoffen, wie etwa die systemspezifisch erforderlichen Hilfsstoffe, kann hinderlich sein, weil dadurch einer ausreichenden Nachlieferung von Sauerstoff (Andiffusion) entgegengewirkt wird, oder lokal zu wenig Ca-MP zur Abpufferung der $OH^-$-Ionen zur Verfügung steht.

Die Mitwirkung von gelöstem Sauerstoff als Passivator ist praktisch bei allen angegebenen Beispielen erforderlich, wenn in Defekten der betreffenden Beschichtung die besagte Aktivwirkung eintreten soll. Das trifft auch auf die mit Zinkphosphat bzw. Zinkborat pigmentierten Beschichtungen primär zu, auch wenn es dort durch diverse Fällungsreaktionen noch einen "Verstopfungsprozeß" geben kann.

Erfindungsgemäße Pigmentzubereitungen, die einen Katalysator, beispielsweise Eisenphthalocyanin, enthalten, haben den Vorteil, daß durch Katalyse des obengenannten 4-Elektronen-Schrittes schon bei Anwesenheit von relativ wenig gelöstem Sauerstoff eine zuverlässige Passivierung der Metalloberfläche erreicht wird.

Die obengenannten systemspezifisch erforderlichen Stoffe und Zusätze müssen einer Anstrichstofformulierung keineswegs immer beigemischt sein, sondern werden nur verwendet, wenn sich dadurch eine Verbesserung der Verwendungs- und Verarbeitungseigenschaften des Anstrichstoffes ergibt. Als systemspezifisch erforderliche Stoffe und Zusätze sind zum Beispiel solche Inertstoffe wie blanc fixe, Talkum oder Glimmer zu verstehen. Sie sind jedoch für sich genommen keine Aktivpigmente, auch wenn sie natürlich infolge ihrer dispersiven Wechselwirkungen mit den anderen Pigmenten deren Feinverteilung gewährleisten, einer Agglomeration entgegenwirken.

Die erfindungsgemäße Pigmentzubereitung ist in den Anstrichstoffen in Konzentrationen von 10 bis 45 Masse-% enthalten.

Die erfindungsgemäße Pigmentzubereitung wird aus den Einzelkompenenten mit den in der Pigment- und Anstrichmittelindustrie üblichen Maschinen, wie Sand- oder Perlmühlen, Kugelmühlen und Walzenmühlen in praxisgerechter Mahlfeinheit hergestellt und in Anstrichformulierungen auf Basis üblicher Bindemittel dispergiert. Es können aber auch die einzelnen Komponenten nacheinander im Bindemittel dispergiert werden. Derartige Bindemittel sind Alkydharze, Polyurethane, chlorierter Kautschuk oder Melaminharze, die in einer Menge von 35 bis 55 Masse-% in den Anstrichformulierungen enthalten sind.

Weitere Bestandteile sind in einer Menge von bis zu 2 Masse-% Sikkative und Hilfsstoffe, wie z.B. Dispergiermittel, Verlaufsmittel, Antiabsetzmittel, Haftmittel oder Thixotropiermittel. Außerdem sind noch Lösungsmittel in einem Anteil von 10 bis 20 Masse-% enthalten, die auf das jeweilige Bindemittel fachgemäß abgestimmt werden müssen. Übliche Lösungsmittel sind Butylacetat, Xylen und Paraffinkohlenwasserstoffgemische im Siedebereich von 120 bis 180 °C.

Da die wasseraffinen funktionellen Gruppen der Polymere der betreffenden organischen Bindemittel infolge der Säure-Base-Wechselwirkungen mit den erfindungsgemäß enthaltenen oxidbelegten Feststoffpigmentpartikeln und den dadurch geförderten Vernetzungsreaktionen in einem viel höheren Ausmaß gebunden werden als in Anstrichstoffen, die den erfindungsgemäßen Zusatz nicht enthalten, neigen die damit erzeugten Schichten im ausgehärteten Zustand bei Kontakt mit wäßrigen Medien weit weniger zur Aufnahme von Wasser (Quellung) und dessen Diffusion oder Permeation bis zum Metallsubstrat. Das ist schließlich auch zutreffend, wenn der Anstrichstoff wasseraffine Aktivpigmente, wie zum Beispiel Zinkphosphat, Zinkborat oder Calcium-Metaphosphat enthält. Denn durch den erfindungsgemäßen Zusatz eines oxidbelegten Feststoffpigmentes wird erreicht, daß solche Aktivpigmente in gleichmäßiger Feinverteilung und nicht in größeren Partikelagglomeraten in die Beschichtung eingebettet werden, ohne daß ihre Aktivwirkung verloren geht. Letztere wird sogar begünstigt, da die einen erfindungsgemäßen Zusatz enthaltenen organischen Beschichtungen einerseits dichter gepackt sind und andererseits eine höhere Haftfestigkeit auf dem Metallsubstrat besitzen. Dadurch wird erreicht, daß bei den unter dem Einfluß aggressiver wäßriger Medien stattfindenden Abbaureaktionen in einer solchen Schicht nur relativ klein dimensionierte Defekte entstehen, aus denen das Aktivpigment nicht ausgewaschen wird. Ist der Schichtabbau schließlich lokal bis zum Metallsubstrat fortgeschritten, dann verhindert die dort in den Nachbarbereichen noch bestehende hohe Haftfestigkeit der Beschichtung den Start der Unterfilmkorrosion (bei Eisenwerkstoffen: Unterrostung).

Die Korrosion des am Porengrund eines solchen Defekts in relativ kleiner Fläche freigelegten Metallsubstrats kann unter diesen Bedingungen offensichtlich durch das im elektrolytgefüllten Defekt vorhandene Aktivpigment schnell und wirksam inhibiert werden, wie die Ergebnisse entsprechend durchgeführter Korrosionsprüfungen ergaben. Es bedarf dann nicht der gleichzeitigen Mitwirkung eines Oxidationsmittels, das die Bildung einer festen Verbindung im Defekt der organischen Beschichtung entweder durch Stimulierung der Korrosion des freigelegten Metallsubstrats oder durch dessen Passivierung fördert. Seine gleichzeitige Existenz ist jedoch dem erreichbaren Korrosionsschutzeffekt keinesfalls abträglich.

Enthält die erfindungsgemäße Pigmentzubereitung als Aktivpigment eine chelatbildende Verbindung und ein Hydroxylionen bindendes Material gemäß der Deutschen Patentanmeldung 44 11 568.7, durch die der im wäßrigen Medium von Defekten der organischen Beschichtung vorhandene Luftsauerstoff zur Passivierung des am Porengrund freigelegten Metallsubstrats befähigt wird, dann "heilen" diese Defektstellen besonders schnell aus und die Korrosionsschutzeigenschaften der Beschichtung bleiben weiterhin in vollem Umfang gewährleistet.

Es wurde bereits hervorgehoben, daß die Wirkung der erfindungsgemäß verwendeten oxidbelegten plättchenförmigen Pigmente in Korrosionsschutz-Grundanstrichstoffen in erster Linie den Säure-Base-Eigenschaften der auf der Oxidbelegung vorhandenen Oberflächen-Hydroxylgruppen zugeschrieben werden muß und sich in isoelektrischen Punkten $pH_{iso} < 5$ dokumentiert. Zugrunde liegt dabei das auf Pearson zurückgehende sog. Hart-Weich-Prinzip (HSAP) (vgl. z.B.: Acid-Base Interactions: Relevance to Adhesion Science and Technology (Ed. by K.L. Mittal and H.R. Anderson, jr), VSP Utrecht, The Netherlands 1991, 25 pp.), wonach starke Lewis-Säuren, z.B. die auf Oxidoberflächen unterhalb $pH_{iso}$ vorhandenen funktionellen Gruppen $-MeOH_2^+$ bevorzugt mit starken Lewis-Basen, wie etwa den carboxylgruppenhaltigen Polymerpartikeln eines organischen Bindemittels in Wechselwirkungen treten. Schwache Lewis-Säuren gehen dagegen vor allem mit schwachen Lewis-Basen Wechselwirkungen ein, wofür die Adsorption von Vinylgruppen-haltigen Harzpartikeln über die Alkenyl-C-C-Doppelbindung ($\pi$-Elektronensystem als schwache Base) an oxidfreien Oberflächen von Übergangsmetallen (schwache Säure) als Beispiel genannt werden kann.

Für die Affinität $A_R$ ($= - \Delta_R G°$) der erstgenannten Wechselwirkungen wurde bereits die Beziehung

$$A_R = 2{,}303\ RT\ (pK_B - pH_{iso})$$

theoretisch begründet (bei 25 °C: $A_R = 5{,}7\ (pK_B - pH_{iso})$ in kJ/mol) (vgl. z.B.: Interface Conversion for Polymer Coatings (Ed. by P. Weiss and G.D. Cheever) Elsevier Ltd, New York 1968, pp. 3-60). Danach ist $A_R$ um so größer, je größer die Differenz zwischen dem isoelektrischen Punkt des Oxids, $pH_{iso}$, und dem negativen dekatischen Logarithmus der Dissoziationskonstante $K_B$ der betreffenden Base ($pK_B$-Wert) ist.

Die erfindungsgemäß eingesetzten Pigmente mit dem Handelsnamen Iriodin® 103 oder 9103 WR, bestehend aus 42 % $TiO_2$ (Rutil) auf Glimmer, haben $pH_{iso} = (4{,}7 \pm 0{,}2)$, die als Iriodin® 504 oder 9504 WR bezeichneten, bestehend aus 46 % $Fe_2O_3$ (Hämatit) auf Glimmer, sogar $pH_{iso} = (3{,}6 \pm 0{,}2)$. Sie bringen folglich wegen $pH_{iso} < 5$ wesentlich bessere Voraussetzungen für energieintensive Wechselwirkungen mit starken Lewis-Basen, wie etwa den carboxylgruppenhaltigen Polymerpartikeln mit, als die betreffenden Oxidpulver. Ist doch $pH_{iso}$ (isoelectric point, i.e.p., etwa identisch mit dem point of zero charge, p.z.c.) im Fall des $TiO_2$ (Rutil) stets $\geqq 5{,}8$, im Fall der Fe(III)-Oxide sogar $\geqq 6{,}5$ (vgl. z.B.: Chem. Rev. 65 (1965) S. 177 ff und Progr. in Org. Coatings 19 (1991) S. 227 ff.). An Beschichtungen, die mit Anstrichstoffen hergestellt wurden, deren Pigmentkombination auch $Fe_2O_3$-Pulver (z.B. Eisenoxidrot Bayferrox 140) und/oder $TiO_2$-Pulver (Weißpigment) neben einem Aktivpigment wie Zinkphosphat oder Zinkborat enthielt, trat der erfindungsgemäße Effekt nicht auf und die ermittelten Korrosionsschutzeigenschaften waren stets schlechter als die bei Bleimennige- oder Zinkchromat-Pigmentierung erreichten.

Das auf plättchenförmigem Trägermaterial, wie Glimmer abgeschiedene $Fe_2O_3$ ist im Unterschied zu allen Fe(III)-Ionen enthaltenden Oxidpulvern nicht elektrochemisch reduzierbar. Daher kann es auch nicht kathodisch fungieren, etwa nach

$$Fe_2O_3 + H_2O + 2\,H^+ + 2\,e^- \rightarrow 2\,Fe(OH)_2$$

und die Korrosion des Fe-Metalls bedingen, z.B. nach

$$Fe + 2\,H_2O \rightarrow 2\,Fe(OH)_2 + 2\,H^+ + 2\,e^-$$

gibt die Bruttoreaktion

$$Fe + Fe_2O_3 + 3\,H_2O \rightarrow 3\,Fe(OH)_2,$$

die tatsächlich nachgewiesen ist.

Hierin besteht ein weiterer Vorteil bei der erfindungsgemäßen Applikation von Eisenoxid-beschichteten plättchenförmigen Pigmenten in Korrosionsschutz-Grundanstrichstoffen.

Die mit oxidbelegten plättchenförmigen Pigmenten, insbesondere auf Eisenwerkstoffoberflächen erreichbare Verbesserung der Korrosionsschutzeigenschaften Aktivpigment-haltiger Grundierungen ist keinesfalls nur auf den Einsatz in wasserfreien Anstrichstoffen, die auf Basis organischer Lösungsmittel formuliert sind, beschränkt, sondern eignet sich auch für Wasserlacke, zumal diese Pigmente im für Wasserlacke typischen pH-Bereich $4{,}0 \leqq pH \leqq 9{,}0$ chemisch völlig beständig sind. Mit erfindungsgemäßen Pigmentzubereitungen werden folglich auch die Korrosionsschutzeigenschaften von Grundanstrichstoffen, die mit wasserverdünnbaren Polymerdispersionen formuliert wurden, insbesondere bei Anwendung für Eisenwerkstoffe, erheblich verbessert.

Die erfindungsgemäßen Pigmentzubereitungen werden für Anstrichstoffformulierungen, die auf den verschiedensten Metallsubstraten, insbesondere auf Eisenwerkstoffen, als Grundierung appliziert werden, eingesetzt. Die Grundierung zeichnet sich nach Abschluß der Filmbildung unter atmosphärischer Belastung oder Exposition in belüfteten wäßrigen Medien durch ausgeprägte Korrosionsschutzeigenschaften aus.

Die erfindungsgemäßen Pigmentzubereitungen erfüllen alle Anforderungen, die an Pigmente für Korrosionsschutzgrundierungen gestellt werden.

Sie beeinträchtigen weder die Verlaufs- noch die Filmbildungseigenschaften des Anstrichstoffes und führen statt dessen zu gleichmäßigen, auf Metallsubstraten besonders festhaftenden und alterungsbeständigen Beschichtungen mit hoher Barrierewirkung; sie schränken auch nicht die Überstreichbarkeit der erzeugten Grundierung für den Aufbau von Mehrfachschichtsystemen ein und sind vor allem in der Lage, der Diffusion und Permeation von wäßrigen Medien in die organische Beschichtung entgegenzuwirken sowie das Metallsubstrat in Poren oder Defekten der Beschichtung vor Korrosion zu schützen, indem sie die schnelle Ausscheidung schwerlöslicher Verbindungen und damit ein Verstopfen der Defektstellen veranlassen. Dadurch wird auch gewährleistet, daß es nicht zur Unterfilmkorrosion kommt und die Korrosionsschutzeigenschaften der organischen Beschichtung insgesamt gewährleistet bleiben.

Ein weiterer Vorteil der erfindungsgemäßen Pigmentzubereitungen ist es, daß sie auch in Anstrichstofformulierungen auf Basis wasserverdünnbarer Polymerdispersionen verwendet werden können, ohne daß die Stabilität dieser Wasserlacksysteme gefährdet wird.

Erfindungsgemäße Pigmentzubereitungen wurden in verschiedene Bindemittelsysteme eingearbeitet, wobei die Kornfeinheit unter 20 $\mu$m lag. Durch die für das jeweilige Bindemittel geeigneten Verdünnungsmittel, bei dem Wasserlack auch durch Zusatz eines Verdickers, erhielten die Anstrichstoffe mit den erfindungsgemäßen Pigmentzubereitungen die zur Verarbeitung erforderliche Viskosität. Auf diese Weise wurden fünf Anstrichstoffe hergestellt, mit denen Probebleche aus einem Massenstahl nach gründlicher Oberflächenvorbehandlung (mechanisches Schleifen, Entfetten mit einem organisch/wäßrigen Reinigungsmittel, Spülen, Trocknen) beschichtet wurden. Diese Probebleche mit vergleichbaren Schichtdicken ($60 \pm 5$ $\mu$m) wurden folgenden Prüfungen unterzogen, wobei gleichzeitig ein Vergleich mit jeweils einem handelsüblichen Referenzsystem, u.a. auch einem Zinkchromat-haltigen Anstrich, erfolgte:

a) Freibewitterung nach DIN 53166

b) MACHU-Test, Wechselbeanspruchung nach 8 h Tauchen in eine Lösung aus 50 g NaCl, 10 ml Eisessig, 5 g 30%ige Wasserstoffperoxidlösung je Liter Wasser (täglich frisch) bei 40 °C und 16 h Exposition in trockener Luft bei Zimmertemperatur je Zyklus

c) Wechselklimatest nach VDA 621-415

**Ergebnisse der Korrosionsschutz-Prüfungen**

a) Freibewitterung nach DIN 53166

Nach einer Auslagerungszeit von 12 Monaten ist der eingebrachte Ritz bei den durch die Referenzsysteme I, II und III beschichteten Proben in einem Umfeld von 2 bis 3 mm Breite dicht von kleinen Blasen umgeben, während bei den Beschichtungen der Beispiele 1 und 2, die die erfindungsgemäßen Pigmentzubereitungen enthalten, erst einzelne wenige Bläschen in unmittelbarer Nähe des Ritzes aufgetreten sind. An den Proben mit der erfindungsgemäßen Pigmentkombination des Beispiels 3 ist nach 12 Monaten noch überhaupt keine Blasenbildung beobachtbar.

Bei den mit einem Wasserlacksystem beschichteten Proben wurde die Freibewitterung nach 6 Monaten abgebrochen, da das Referenzsystem IV neben deutlicher Blasenbildung auch mehrere Durchrostungsstellen aufwies. Die Beurteilung des Blasengrades der Beschichtung nach DIN 53209 und des korrodierten Flächenanteils bezogen auf die Gesamtfläche nach Ablösung der Beschichtung ergab folgende mittlere Bewertung:

| **Beschichtung** | **Blasengrad** | **Anteil korrodierter Fläche in %** |
|---|---|---|
| Referenzsystem IV | $m^4/g^4$ | ca. 75 |
| Beispiel 4 | $m^1/g^1$ | ca. 20 |

b) MACHU-Test

Bei den mit einem lösungsmittelhaltigen Anstrichstoff erzeugten Beschichtungen erfolgte die Beurteilung der Proben nach 8 Zyklen Belastung. Bestimmt wurde wieder der Blasengrad der Beschichtungen nach DIN 53209 sowie der korrodierte Flächenanteil bezogen auf die Gesamtfläche der Blechproben nach Ablösung der Beschichtung:

| **Beschichtung** | **Blasengrad** | **Anteil korrodierter Fläche in %** |
|---|---|---|
| Referenzsystem I | $m^3/g^3$ | 42 |
| Referenzsystem II | $m^4/g^4$ | 60 |
| Referenzsystem III | $m^3/g^3$ | 38 |
| Beispiel 1 | $m^1/g^1$ | ca. 5 |
| Beispiel 2 | $m^1/g^1$ | ca. 8 |
| Beispiel 3 | 0/0 | < 1 |

Die mit einem Wasserlack erzeugten Beschichtungen wurden schon nach 3 Zyklen beurteilt:

| **Beschichtung** | **Blasengrad** | **Anteil korrodierter Fläche in %** |
|---|---|---|
| Referenzsystem IV | $m^4/g^4$ | ca. 60 |
| Beispiel 4 | $m^1/g^1$ | ca. 10 |

c) Wechselklimatest nach VDA 621-415

Nach 9 Zyklen Wechselklimabeanspruchung zeigen die Referenzsysteme I, II und III eine stellenweise bis zu 3 mm fortgeschrittene Unterrostung am Ritz, während sich dieser Vorgang an den erfindungsgemäß beschichteten Beispielen 1, 2 und 3 noch nicht eindeutig fixieren läßt (< 1 mm).

Die Bewertung der mit einem Wasserlack beschichteten Proben erfolgte nach 6 Zyklen. Dabei waren bei den Beschichtungen des Referenzsystems IV neben einer etwa 4 mm fortgeschrittenen Unterrostung am Ritz erste punktförmige Korrosionsdurchbrüche festzustellen. Bei den nach Beispiel 4 hergestellten Beschichtungen war die vom Ritz ausgehende Unterrostung sehr gering ausgeprägt (< 1 mm), der Blasengrad der Beschichtungen jedoch im Mittel mit $m^2/g^2$ einzustufen.

Die Ergebnisse zeigen, daß die mit den erfindungsgemäßen Pigmentzubereitungen hergestellten Schutzanstriche auf Eisenwerkstoffoberflächen im Vergleich zu den Referenzsystemen einen deutlich besseren Schutz gegen Korrosion bewirken, obwohl Referenzsystem II ein hochwirksames Chromatpigment enthält.

Die komplette Offenbarung aller vor- und nachstehend aufgeführten Anmeldungen, Patente und Veröffentlichungen ist durch Bezugnahme in dieser Anmeldung enthalten.

Die nachfolgenden Beispiele sollen die Erfindung naher erläutern, ohne sie jedoch zu beschränken.

| Beispiel 1 | |
|---|---|
| | Masse-% |
| Zinkphosphat | 7,41 |
| Zinkweiß (Zinkoxid) | 11,97 |
| Iriodin® 9504 WR | 10,82 |
| Microtalkum N | 6,38 |
| Blanc fixe | 6,37 |
| Harzlösung, 60%ig in Xylen (luft- und wärmetrocknndes kurzöliges Alkydharz) | 42,85 |
| Lösungsmittel | 12,9 |
| Sikkative und Hilfsstoffe | 1,3 |

| Beispiel 2 | |
|---|---|
| | Masse-% |
| Zinkborat | 11,22 |
| Iriodin® 9103 WR | 16,5 |
| Microtalkum N | 6,32 |
| Blanc fixe | 5,28 |
| Harzlösung Plexigum PM 685 (Acrylharz in Xylen) | 42,72 |
| Lösungsmittel | 16,45 |
| Sikkative und Hilfsstoffe | 1,51 |

| Beispiel 3 | |
|---|---|
| | Masse-% |
| Eisenphthalocyanin | 6,45 |
| Ca-Metaphosphat | 12,8 |
| Zinkphosphat | 7,22 |
| Iriodin® 9504 WR | 9,9 |
| Harzlösung wie Beispiel 1 | 47,6 |
| Lösungsmittel | 14,6 |
| Sikkative und Hilfsstoffe | 1,43 |

| Beispiel 4 | |
|---|---|
| | Masse-% |
| Zinkphosphat | 7,24 |
| Iriodin® 9504 WR | 10,5 |
| Microtalkum AT extra | 6,37 |
| Blanc fixe micro | 6,1 |
| Zinkweiß | 7,44 |
| Wasserverdünnbare Polymerdisperison als Bindemittel, bestehend aus einem feindispersen carboxylgruppenhaltigen Styren-Butadien-Copolymerisat mit anionenaktivemEmulgator, Festkörpergehalt 50 %, pH 8,5 | 52,7 |
| Nitrithaltiger Korrosionsinhibitor | 2,5 |
| Butylglykol | 2,5 |
| Entschäumer, Netzmittel, Verdicker | 4,65 |

| Vergleichsbeispiel 1 | |
|---|---|
| | Masse-% |
| Zinkphosphat | 7,20 |
| Zinkweiß (Zinkoxid) | 11,63 |
| Microtalkum N | 6,19 |
| Bayferrox 140 (Eisenoxidrot) | 13,36 |
| Blanc fixe | 6,19 |
| Harzlösung wie Beispiel 1 | 41,64 |
| Lösungsmittel | 12,50 |
| Sikkative und Hilfsstoffe | 1,29 |

| Vergleichsbeispiel 2 | |
|---|---|
| | Masse-% |
| Zinkgelb (Zinkchromat) | 7,63 |
| Zinkweiß | 11,63 |
| Microtalkum AT 1 | 6,19 |
| Bayferrox 140 | 13,36 |
| Blanc fixe | 6,19 |
| Harzlösung wie Beispiel 1 | 41,21 |
| Lösungsmittel | 12,50 |
| Sikkative und Hilfsstoffe | 1,29 |

| Vergleichsbeispiel 3 | |
|---|---|
| | Masse-% |
| Zinkborat | 12,2 |
| Microtalkum N | 6,7 |
| Bayferrox 140 | 12,5 |
| Blanc fixe | 7,7 |
| Harzlösung wie Beispiel 2 | 42,8 |
| Lösungsmittel | 16,5 |
| Sikkative und Hilfsstoffe | 1,6 |

| Vergleichsbeispiel 4 | |
|---|---|
| | Masse-% |
| Zinkphosphat | 7,0 |
| Microtalkum AT extra | 6,0 |
| Bayferrox 140 | 8,0 |
| Blanc fixe | 12,0 |
| Wasserverdünnbare Polymerdispersion als Bindemittel wie Beispiel 4 | 56,3 |
| Nitrithaltiger Korrosionsinhibitor | 2,5 |
| Butylglykol | 3,0 |
| Entschäumer, Netzmittel, Verdicker | 5,2 |

| Beispiel 5 | |
|---|---|
| | Masse-% |
| Eisenphthalocyanin | 6,30 |
| Ca-Metaphosphat | 11,25 |
| Zinkphosphat | 6,25 |
| Iriodin® 9504 WR | 10,25 |
| Blanc fixe micro | 6,2 |
| Wasserverdünnbare Polymerdispersion wie Beispiel 4 | 50,8 |
| Nitrithaltiger Korrosionsinhibitor | 2,0 |
| Butylglykol | 2,7 |
| Entschäumer, Netzmittel, Verdicker | 4,25 |

a) Freibewitterung nach DIN 53166 nach 6 Monaten:

| Beschichtung | Blasengrad | Anteil korrodierter Fläche in % |
|---|---|---|
| Beispiel 5 | $m^1/g^1$ | ca. 5 |

b) MACHU-Test nach 3 Zyklen

| Beschichtung | Blasengrad | Anteil korrodierter Fläche in % |
|---|---|---|
| Beispiel 5 | $m^1/g^1$ | < 5 |

c) VDA 611-415 nach 6 Zyklen:

| Beschichtung | Blasengrad | Anteil korrodierter Fläche in % |
|---|---|---|
| Beispiel 5 | $m^1/g^1$ | < 1 mm |

**Patentansprüche**

**1.** Pigmentzubereitung, enthaftend

(i) 10-80 Masse-% eines mit einem Metalloxid beschichteten, plättchenförmigen Trägermaterials und

(ii) 20-60 Masse-% eines Aktivpigmentes.

2. Pigmentzubereitung nach Anspruch 1, dadurch gekennzeichnet, daß das mit einem Metalloxid beschichtete, plättchenförmige Trägermaterial ein mit Titandioxid oder Eisenoxid beschichteter Glimmer ist.

3. Pigmentzubereitung nach den Ansprüchen 1 und 2, dadurch gekennzeichnet, daß das Aktivpigment eine Verbindung ist, die in der Lage ist, in Defekten einer organischen Beschichtung primär entstehende Korrosionsprodukte in feste, wasserstabile Verbindungen umzuwandeln.

4. Pigmentzubereitung nach mindestens einem der Ansprüche 1 bis 3, dadurch gekennzeichnet, daß das Aktivpigment Zinkphosphat, Zinkborat oder Calciummetaphosphat ist.

5. Pigmentzubereitung nach mindestens einem der Ansprüche 1 bis 4, dadurch gekennzeichnet, daß das Aktivpigment eine monomere und/oder polymere, metallfreie oder metallhaltige Chelat-Komplex-Verbindung gemäß den allgemeinen Formeln I und II ist

I

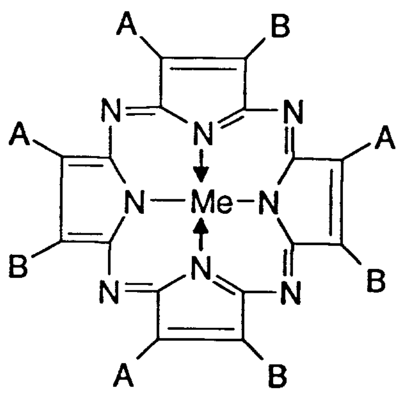

II

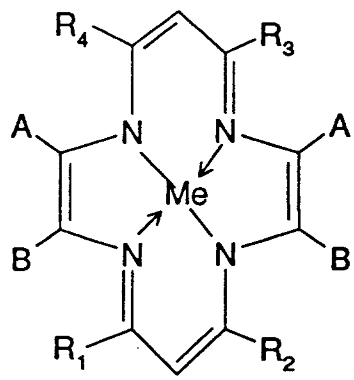

worin

| | |
|---|---|
| A und B | jeweils unabhängig voneinander einen aromatischen oder cycloaliphatischen Rest, der auch Heteroatome, wie S, Se, O und N, sowie Aryl-, Alkyl-, Halogen-, sauerstoff-, schwefel- oder stickstoffhaltige Gruppen als zusätzliche Substituenten enthalten kann, |
| $R^1$, $R^2$, $R^3$ und $R^4$ | H-Atome oder Alkylreste und |
| Me | Fe, Ni, Co, Mn, Bi, Sn, Zn oder $H_2$ |

bedeuten.

6. Pigmentzubereitung nach mindestens einem der Ansprüche 1 bis 5, dadurch gekennzeichnet, daß das Aktivpigment ein Phthalocyanin, Tetraarylporphyrin oder ein Tetraazaanulen ist.

7. Pigmentzubereitung nach mindestens einem der Ansprüche 1 bis 6, dadurch gekennzeichnet, daß das Aktivpigment ein Hydroxylionen bindendes Material ist.

8. Pigmentzubereitung nach mindestens einem der Ansprüche 1 bis 7, dadurch gekennzeichnet, daß das Aktivpigment ein Metaphosphat, Bi- oder Triphosphat, Kieselgel, Silikat, Alumosilikat oder Calcit ist.

9. Verwendung der Pigmentzubereitung nach den Ansprüchen 1 bis 8 für Korrosionsschutzgrundierungen.

10. Korrosionsschutzanstrichstoff, enthaltend die Pigmentzubereitung nach den Ansprüchen 1 bis 8.